# EUROPEAN PATENT APPLICATION

(11) **EP 4 342 970 A1**
(43) Date of publication of application: **27.03.2024**
(21) Application number: 22196787.0
(22) Date of filing: 21.09.2022
(51) Int. Cl.: C11D 3/04, C11D 3/10, C11D 3/42, C11D 17/06, C09B 67/36, C11D 3/40

(54) **COLOURED FABRIC HUEING DYE AGENT PARTICLES**

(71) Applicant: Milliken & Company, Spartanburg, South Carolina 29303 (US)
(72) Inventor: De Bruyne, Laurent, 9000 Gent (BE); Spanhove, Steven, 9000 Gent (BE); Guillard, Nathalia, Newcastle upon Tyne, NE12 9BZ (GB); Pearman, Rebecca, Newcastle upon Tyne, NE12 9BZ (GB)
(74) Representative: Hoffmann Eitle

(57) **Abstract**

The present invention relates to a solid detergent cleaning composition comprising coloured fabric hueing dye agent particles.

## Description

### FIELD OF THE INVENTION

The present invention relates to coloured fabric hueing dye agent particles and solid detergent cleaning compositions containing such particles. The particles do not readily bleed, and the solid detergent cleaning compositions have good performance and stability profiles.

### BACKGROUND OF THE INVENTION

Laundry detergent manufacturers need to provide a product that has good performance and good stability profiles. The manufacturers typically incorporate numerous chemistries to provide the good performance profile. Where possible, these chemistries are often formulated into a base particle, such as a spray-dried particle or an agglomerate along with significant amounts of ingredients such as detersive surfactant. However, some chemistries, are formulated into the their own dedicated particle. This is typically because these chemistries are not formulated into every one of the manufacturers products. By having separate particles of these chemistries, it is logistically easier for the manufacturer to start with the same "base" detergent particle across their product portfolio, and then only add these separate particles to the required products. This particle architecture is a way of optimizing the logistics of manufacturing multiple laundry powder products that share production facilities. One such chemistry that is not always incorporated across an entire product portfolio is hueing dye.

Hueing dyes provide good whiteness performance to the laundry powder. The are often formulated in the form of their own dedicated particle. Sometimes, these particles are deliberately designed to be white, and to be "invisible" to the consumer when combined with a "base" detergent particle, which is often white. Alternatively, these particles can be coloured, and provide aesthetic benefits to the laundry powder as well as providing good whiteness performance. However, these coloured particles can have problems of bleeding, where some of the dye "bleeds" into the rest of the laundry detergent powder.

The present invention seeks to provide hueing dye particles and a laundry powder that contains such particles. The hueing dye particle is coloured and provides aesthetic benefits as well as providing whiteness performance benefits. The hueing dye particle does not readily bleed, and the laundry detergent powder containing the particles has a good stability profile.

The inventors have found that formulating a particle using hueing dye and a water-soluble inorganic salt, and increasing the envelope density of the particle, enables higher levels of fabric hueing dye agent to be incorporated into the particle whilst also improving the stability profile of the particle in that the high-density particles are less prone to bleeding.

### SUMMARY OF THE INVENTION

The present invention provides a composition comprising coloured fabric hueing dye agent particles, wherein the coloured fabric hueing dye agent particles comprise:
(a) from 6.0wt% to 10wt% by weight thereof of the fabric hueing dye agent; and
(b) a water-soluble inorganic salt,
wherein the coloured fabric hueing dye agent particles have an envelope density of at least 1.9 g/cm3 as measured by Geopyc method.

The present invention also provides a solid detergent cleaning composition comprising coloured fabric hueing dye agent particles and at least one laundry care ingredient, wherein the coloured fabric hueing dye agent particles comprise:
(a) from 6.0wt% to 10wt% by weight thereof of the fabric hueing dye agent; and
(b) a water-soluble inorganic salt,
wherein the coloured fabric hueing dye agent particles have an envelope density of at least 1.9 g/cm3 as measured by Geopyc method.

The present invention also provides a method of making the solid detergent cleaning composition, a method of using the solid detergent cleaning composition, and uses of the coloured fabric hueing dye agent particles and the solid detergent cleaning composition.

### DETAILED DESCRIPTION OF THE INVENTION

**Coloured fabric hueing dye agent particles.** The coloured fabric hueing dye agent particles comprise:
(a) from 6.0wt% to 10wt% by weight thereof of the fabric hueing dye agent; and
(b) a water-soluble inorganic salt,
wherein the coloured fabric hueing dye agent particles have an envelope density of at least 1.9 g/cm3 as measured by Geopyc method.

**Fabric hueing dye agent.** Typically, the fabric hueing dye agent comprises a fabric hueing dye. Suitable hueing dye agents are described in more detail below.

A preferred hueing agent has the following structure: 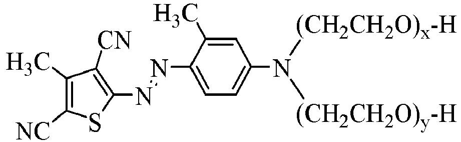 wherein the index values x and y are independently selected from 1 to 10,

**Water-soluble inorganic salt.** Any suitable water-soluble inorganic salt can be used. A preferred water-soluble inorganic salt is sodium carbonate.

**A solid detergent cleaning composition.** The solid detergent cleaning composition comprises coloured fabric hueing dye agent particles and a laundry care ingredient, wherein the coloured fabric hueing dye agent particles comprise:
(a) from 6.0wt% to 10wt% by weight thereof of the fabric hueing dye agent; and
(b) a water-soluble inorganic salt,
wherein the coloured fabric hueing dye agent particles have an envelope density of at least 1.9 g/cm3 as measured by Geopyc method.

Typically, the composition is a laundry detergent composition.

The composition can be in any suitable solid form. The composition can be in the form of a single-compartment pouch, a multi-compartment pouch, a sheet, a pastille or bead, a fibrous article, a tablet, a bar, flake, or any mixture thereof. Preferably, the composition is in powder form.

Preferably, the composition comprises surfactant, preferably from 10wt% to 50wt% surfactant.

**Detergent ingredients.** Typically, the composition comprises other detergent ingredients. These detergent ingredients can be selected from one or more of: enzymes, bleach agents, anti-redeposition agents, neutralizers, optical brighteners, foam inhibitors, chelators, bittering agents, dye transfer inhibitors, soil release agents, water softeners, electrolytes, pH regulators, anti-greying agents, anti-crease components, colorants, scents, processing aids, and any mixture thereof.

**Solid free-flowing particulate laundry detergent composition:** Typically, the solid free-flowing particulate laundry detergent composition is a fully formulated laundry detergent composition, not a portion thereof such as a spray-dried, extruded or agglomerate particle that only forms part of the laundry detergent composition. Typically, the solid composition comprises a plurality of chemically different particles, such as spray-dried base detergent particles and/or agglomerated base detergent particles and/or extruded base detergent particles, in combination with one or more, typically two or more, or five or more, or even ten or more particles selected from: surfactant particles, including surfactant agglomerates, surfactant extrudates, surfactant needles, surfactant noodles, surfactant flakes; phosphate particles; zeolite particles; silicate salt particles, especially sodium silicate particles; carbonate salt particles, especially sodium carbonate particles; polymer particles such as carboxylate polymer particles, cellulosic polymer particles, starch particles, polyester particles, polyamine particles, terephthalate polymer particles, polyethylene glycol particles; aesthetic particles such as coloured noodles, needles, lamellae particles and ring particles; enzyme particles such as protease granulates, amylase granulates, lipase granulates, cellulase granulates, mannanase granulates, pectate lyase granulates, xyloglucanase granulates, bleaching enzyme granulates and co- granulates of any of these enzymes, preferably these enzyme granulates comprise sodium sulphate; bleach particles, such as percarbonate particles, especially coated percarbonate particles, such as percarbonate coated with carbonate salt, sulphate salt, silicate salt, borosilicate salt, or any combination thereof, perborate particles, bleach activator particles such as tetra acetyl ethylene diamine particles and/or alkyl oxybenzene sulphonate particles, bleach catalyst particles such as transition metal catalyst particles, and/or isoquinolinium bleach catalyst particles, pre-formed peracid particles, especially coated pre-formed peracid particles; filler particles such as sulphate salt particles and chloride particles; clay particles such as montmorillonite particles and particles of clay and silicone; flocculant particles such as polyethylene oxide particles; wax particles such as wax agglomerates; silicone particles, brightener particles; dye transfer inhibition particles; dye fixative particles; perfume particles such as perfume microcapsules and starch encapsulated perfume accord particles, or pro-perfume particles such as Schiff base reaction product particles; hueing dye particles; chelant particles such as chelant agglomerates; and any combination thereof.

Suitable laundry detergent compositions comprise a detergent ingredient selected from: detersive surfactant, such as anionic detersive surfactants, non-ionic detersive surfactants, cationic detersive surfactants, zwitterionic detersive surfactants and amphoteric detersive surfactants; polymers, such as carboxylate polymers, soil release polymer, anti-redeposition polymers, cellulosic polymers and care polymers; bleach, such as sources of hydrogen peroxide, bleach activators, bleach catalysts and pre-formed peracids; photobleach, such as such as zinc and/or aluminium sulphonated phthalocyanine; enzymes, such as proteases, amylases, cellulases, lipases; zeolite builder; phosphate builder; co-builders, such as citric acid and citrate; carbonate, such as sodium carbonate and sodium bicarbonate; sulphate salt, such as sodium sulphate; silicate salt such as sodium silicate; chloride salt, such as sodium chloride; brighteners; chelants; hueing agents; dye transfer inhibitors; dye fixative agents; perfume; silicone; fabric softening agents, such as clay; flocculants, such as polyethyleneoxide; suds supressors; and any combination thereof.

Suitable laundry detergent compositions may have a low buffering capacity. Such laundry detergent compositions typically have a reserve alkalinity to pH 9.5 of less than 5.0gNaOH/100g. These low buffered laundry detergent compositions typically comprise low levels of carbonate salt.

**Detersive Surfactant:** Suitable detersive surfactants include anionic detersive surfactants, non-ionic detersive surfactant, cationic detersive surfactants, zwitterionic detersive surfactants and amphoteric detersive surfactants. Suitable detersive surfactants may be linear or branched, substituted or un-substituted, and may be derived from petrochemical material or biomaterial.

**Anionic detersive surfactant:** Suitable anionic detersive surfactants include sulphonate and sulphate detersive surfactants.

Suitable sulphonate detersive surfactants include methyl ester sulphonates, alpha olefin sulphonates, alkyl benzene sulphonates, especially alkyl benzene sulphonates, preferably C₁₀₋₁₃ alkyl benzene sulphonate. Suitable alkyl benzene sulphonate (LAS) is obtainable, preferably obtained, by sulphonating commercially available linear alkyl benzene (LAB); suitable LAB includes low 2-phenyl LAB, other suitable LAB include high 2-phenyl LAB, such as those supplied by Sasol under the tradename Hyblene^{®}.

Suitable sulphate detersive surfactants include alkyl sulphate, preferably C₈₋₁₈ alkyl sulphate, or predominantly C₁₂ alkyl sulphate.

A preferred sulphate detersive surfactant is alkyl alkoxylated sulphate, preferably alkyl ethoxylated sulphate, preferably a C₈₋₁₈ alkyl alkoxylated sulphate, preferably a C₈₋₁₈ alkyl ethoxylated sulphate, preferably the alkyl alkoxylated sulphate has an average degree of alkoxylation of from 0.5 to 20, preferably from 0.5 to 10, preferably the alkyl alkoxylated sulphate is a C₈₋₁₈ alkyl ethoxylated sulphate having an average degree of ethoxylation of from 0.5 to 10, preferably from 0.5 to 5, more preferably from 0.5 to 3 and most preferably from 0.5 to 1.5.

The alkyl sulphate, alkyl alkoxylated sulphate and alkyl benzene sulphonates may be linear or branched, substituted or un-substituted, and may be derived from petrochemical material or biomaterial.

Other suitable anionic detersive surfactants include alkyl ether carboxylates.

Suitable anionic detersive surfactants may be in salt form, suitable counter-ions include sodium, calcium, magnesium, amino alcohols, and any combination thereof. A preferred counterion is sodium.

**Non-ionic detersive surfactant:** Suitable non-ionic detersive surfactants are selected from the group consisting of: C₈-C₁₈ alkyl ethoxylates, such as, NEODOL^{®} non-ionic surfactants from Shell; C₆-C₁₂ alkyl phenol alkoxylates wherein preferably the alkoxylate units are ethyleneoxy units, propyleneoxy units or a mixture thereof; C₁₂-C₁₈ alcohol and C₆-C₁₂ alkyl phenol condensates with ethylene oxide/propylene oxide block polymers such as Pluronic^{®} from BASF; alkylpolysaccharides, preferably alkylpolyglycosides; methyl ester ethoxylates; polyhydroxy fatty acid amides; ether capped poly(oxyalkylated) alcohol surfactants; and mixtures thereof.

Suitable non-ionic detersive surfactants are alkylpolyglucoside and/or an alkyl alkoxylated alcohol.

Suitable non-ionic detersive surfactants include alkyl alkoxylated alcohols, preferably C₈₋₁₈ alkyl alkoxylated alcohol, preferably a C₈₋₁₈ alkyl ethoxylated alcohol, preferably the alkyl alkoxylated alcohol has an average degree of alkoxylation of from 1 to 50, preferably from 1 to 30, or from 1 to 20, or from 1 to 10, preferably the alkyl alkoxylated alcohol is a C₈₋₁₈ alkyl ethoxylated alcohol having an average degree of ethoxylation of from 1 to 10, preferably from 1 to 7, more preferably from 1 to 5 and most preferably from 3 to 7. The alkyl alkoxylated alcohol can be linear or branched, substituted or un-substituted.

Suitable nonionic detersive surfactants include secondary alcohol-based detersive surfactants.

**Cationic detersive surfactant:** Suitable cationic detersive surfactants include alkyl pyridinium compounds, alkyl quaternary ammonium compounds, alkyl quaternary phosphonium compounds, alkyl ternary sulphonium compounds, and mixtures thereof.

Preferred cationic detersive surfactants are quaternary ammonium compounds having the general formula:

(R)(R₁)(R₂)(R₃)N⁺ X⁻

wherein, R is a linear or branched, substituted or unsubstituted C₆₋₁₈ alkyl or alkenyl moiety, R₁ and R₂ are independently selected from methyl or ethyl moieties, R₃ is a hydroxyl, hydroxymethyl or a hydroxyethyl moiety, X is an anion which provides charge neutrality, preferred anions include: halides, preferably chloride; sulphate; and sulphonate.

**Zwitterionic detersive surfactant:** Suitable zwitterionic detersive surfactants include amine oxides and/or betaines.

**Polymer:** Suitable polymers include carboxylate polymers, soil release polymers, anti-redeposition polymers, cellulosic polymers, care polymers and any combination thereof.

**Carboxylate polymer:** The composition may comprise a carboxylate polymer, such as a maleate/acrylate random copolymer or polyacrylate homopolymer. Suitable carboxylate polymers include: polyacrylate homopolymers having a molecular weight of from 4,000 Da to 9,000 Da; maleate/acrylate random copolymers having a molecular weight of from 50,000 Da to 100,000 Da, or from 60,000 Da to 80,000 Da.

Another suitable carboxylate polymer is a co-polymer that comprises: (i) from 50 to less than 98 wt% structural units derived from one or more monomers comprising carboxyl groups; (ii) from 1 to less than 49 wt% structural units derived from one or more monomers comprising sulfonate moieties; and (iii) from 1 to 49 wt% structural units derived from one or more types of monomers selected from ether bond-containing monomers represented by formulas (I) and (II): 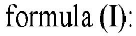 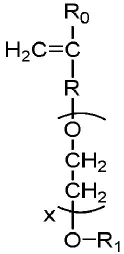 wherein in formula (I), R₀ represents a hydrogen atom or CH₃ group, R represents a CH₂ group, CH₂CH₂ group or single bond, X represents a number 0-5 provided X represents a number 1-5 when R is a single bond, and R₁ is a hydrogen atom or C₁ to C₂₀ organic group; 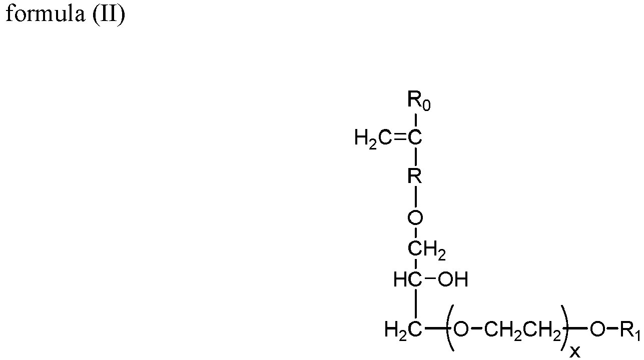 wherein in formula (II), R₀ represents a hydrogen atom or CH₃ group, R represents a CH₂ group, CH₂CH₂ group or single bond, X represents a number 0-5, and R₁ is a hydrogen atom or C₁ to C₂₀ organic group.
It may be preferred that the polymer has a weight average molecular weight of at least 50kDa, or even at least 70kDa.

**Soil release polymer:** The composition may comprise a soil release polymer. A suitable soil release polymer has a structure as defined by one of the following structures (I), (II) or (III):

(I) -[(OCHR¹-CHR²)ₐ-O-OC-Ar-CO-]_{d}

(II) -[(OCHR³-CHR⁴)_{b}-O-OC-sAr-CO-]ₑ

(III) -[(OCHR⁵-CHR⁶)_{c}-OR⁷]_{f}

wherein:
a, b and c are from 1 to 200;
d, e and f are from 1 to 50;
Ar is a 1,4-substituted phenylene;
sAr is 1,3-substituted phenylene substituted in position 5 with SO₃Me;
Me is Li, K, Mg/2, Ca/2, Al/3, ammonium, mono-, di-, tri-, or tetraalkylammonium wherein the alkyl groups are C₁-C₁₈ alkyl or C₂-C₁₀ hydroxyalkyl, or mixtures thereof;
R¹, R², R³, R⁴, R⁵ and R⁶ are independently selected from H or C₁-C₁₈ n- or iso-alkyl; and
R⁷ is a linear or branched C₁-C₁₈ alkyl, or a linear or branched C₂-C₃₀ alkenyl, or a cycloalkyl group with 5 to 9 carbon atoms, or a C₈-C₃₀ aryl group, or a C₆-C₃₀ arylalkyl group.
Suitable soil release polymers are sold by Clariant under the TexCare^{®} series of polymers, e.g. TexCare^{®} SRN240 and TexCare^{®} SRA300. Other suitable soil release polymers are sold by Solvay under the Repel-o-Tex^{®} series of polymers, e.g. Repel-o-Tex^{®} SF2 and Repel-o-Tex^{®} Crystal.

**Anti-redeposition polymer:** Suitable anti-redeposition polymers include polyethylene glycol polymers and/or polyethyleneimine polymers.

Suitable polyethylene glycol polymers include random graft co-polymers comprising: (i) hydrophilic backbone comprising polyethylene glycol; and (ii) hydrophobic side chain(s) selected from the group consisting of: C₄-C₂₅ alkyl group, polypropylene, polybutylene, vinyl ester of a saturated C₁-C₆ mono-carboxylic acid, C₁-C₆ alkyl ester of acrylic or methacrylic acid, and mixtures thereof. Suitable polyethylene glycol polymers have a polyethylene glycol backbone with random grafted polyvinyl acetate side chains. The average molecular weight of the polyethylene glycol backbone can be in the range of from 2,000 Da to 20,000 Da, or from 4,000 Da to 8,000 Da. The molecular weight ratio of the polyethylene glycol backbone to the polyvinyl acetate side chains can be in the range of from 1:1 to 1:5, or from 1:1.2 to 1:2. The average number of graft sites per ethylene oxide unit can be less than 0.02, or less than 0.016, the average number of graft sites per ethylene oxide unit can be in the range of from 0.010 to 0.018, or the average number of graft sites per ethylene oxide unit can be less than 0.010, or in the range of from 0.004 to 0.008.

Suitable polyethylene glycol polymers are described in WO08/007320.

A suitable polyethylene glycol polymer is Sokalan HP22.

**Cellulosic polymer:** Suitable cellulosic polymers are selected from alkyl cellulose, alkyl alkoxyalkyl cellulose, carboxyalkyl cellulose, alkyl carboxyalkyl cellulose, sulphoalkyl cellulose, more preferably selected from carboxymethyl cellulose, methyl cellulose, methyl hydroxyethyl cellulose, methyl carboxymethyl cellulose, and mixures thereof.

Suitable carboxymethyl celluloses have a degree of carboxymethyl substitution from 0.5 to 0.9 and a molecular weight from 100,000 Da to 300,000 Da.

Suitable carboxymethyl celluloses have a degree of substitution greater than 0.65 and a degree of blockiness greater than 0.45, e.g. as described in WO09/154933.

**Care polymers:** Suitable care polymers include cellulosic polymers that are cationically modified or hydrophobically modified. Such modified cellulosic polymers can provide anti-abrasion benefits and dye lock benefits to fabric during the laundering cycle. Suitable cellulosic polymers include cationically modified hydroxyethyl cellulose.

Other suitable care polymers include dye lock polymers, for example the condensation oligomer produced by the condensation of imidazole and epichlorhydrin, preferably in ratio of 1:4:1. A suitable commercially available dye lock polymer is Polyquart^{®} FDI (Cognis).

Other suitable care polymers include amino-silicone, which can provide fabric feel benefits and fabric shape retention benefits.

**Bleach:** Suitable bleach includes sources of hydrogen peroxide, bleach activators, bleach catalysts, pre-formed peracids and any combination thereof. A particularly suitable bleach includes a combination of a source of hydrogen peroxide with a bleach activator and/or a bleach catalyst.

**Source of hydrogen peroxide:** Suitable sources of hydrogen peroxide include sodium perborate and/or sodium percarbonate.

**Bleach activator:** Suitable bleach activators include tetra acetyl ethylene diamine and/or alkyl oxybenzene sulphonate.

**Bleach catalyst:** The composition may comprise a bleach catalyst. Suitable bleach catalysts include oxaziridinium bleach catalysts, transistion metal bleach catalysts, especially manganese and iron bleach catalysts. A suitable bleach catalyst has a structure corresponding to general formula below: 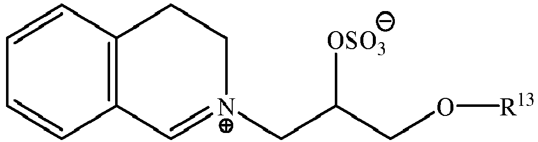 wherein R¹³ is selected from the group consisting of 2-ethylhexyl, 2-propylheptyl, 2-butyloctyl, 2-pentylnonyl, 2-hexyldecyl, n-dodecyl, n-tetradecyl, n-hexadecyl, n-octadecyl, iso-nonyl, isodecyl, iso-tridecyl and iso-pentadecyl.

**Pre-formed peracid:** Suitable pre-form peracids include phthalimido-peroxycaproic acid.

**Enzymes:** Suitable enzymes include lipases, proteases, cellulases, amylases and any combination thereof.

**Protease:** Suitable proteases include metalloproteases and/or serine proteases. Examples of suitable neutral or alkaline proteases include: subtilisins (EC 3.4.21.62); trypsin-type or chymotrypsin-type proteases; and metalloproteases. The suitable proteases include chemically or genetically modified mutants of the aforementioned suitable proteases.

Suitable commercially available protease enzymes include those sold under the trade names Alcalase^{®}, Savinase^{®}, Primase^{®}, Durazym^{®}, Polarzyme^{®}, Kannase^{®}, Liquanase^{®}, Liquanase Ultra^{®}, Savinase Ultra^{®}, Ovozyme^{®}, Neutrase^{®}, Everlase^{®} and Esperase^{®} by Novozymes A/S (Denmark), those sold under the tradename Maxatase^{®}, Maxacal^{®}, Maxapem^{®}, Preferenz P^{®} series of proteases including Preferenz^{®} P280, Preferenz^{®} P281, Preferenz^{®} P2018-C, Preferenz^{®} P2081-WE, Preferenz^{®} P2082-EE and Preferenz^{®} P2083-A/J, Properase^{®}, Purafect^{®}, Purafect Prime^{®}, Purafect Ox^{®}, FN3^{®}, FN4^{®}, Excellase^{®} and Purafect OXP^{®} by DuPont, those sold under the tradename Opticlean^{®} and Optimase^{®} by Solvay Enzymes, those available from Henkel/ Kemira, namely BLAP (sequence shown in Figure 29 of US 5,352,604 with the folowing mutations S99D + S101 R + S103A + V104I + G159S, hereinafter referred to as BLAP), BLAP R (BLAP with S3T + V4I + V199M + V205I + L217D), BLAP X (BLAP with S3T + V4I + V205I) and BLAP F49 (BLAP with S3T + V4I + A194P + V199M + V205I + L217D) - all from Henkel/Kemira; and KAP (Bacillus alkalophilus subtilisin with mutations A230V + S256G + S259N) from Kao.

A suitable protease is described in WO11/140316 and WO11/072117.

**Amylase:** Suitable amylases are derived from AA560 alpha amylase endogenous to Bacillus sp. DSM 12649, preferably having the following mutations: R118K, D183^{∗}, G184^{∗}, N195F, R320K, and/or R458K. Suitable commercially available amylases include Stainzyme^{®}, Stainzyme^{®} Plus, Natalase, Termamyl^{®}, Termamyl^{®} Ultra, Liquezyme^{®} SZ, Duramyl^{®}, Everest^{®} (all Novozymes) and Spezyme^{®} AA, Preferenz S^{®} series of amylases, Purastar^{®} and Purastar^{®} Ox Am, Optisize^{®} HT Plus (all Du Pont).

A suitable amylase is described in WO06/002643.

**Cellulase:** Suitable cellulases include those of bacterial or fungal origin. Chemically modified or protein engineered mutants are also suitable. Suitable cellulases include cellulases from the genera *Bacillus, Pseudomonas, Humicola, Fusarium, Thielavia, Acremonium,* e.g., the fungal cellulases produced from *Humicola insolens, Myceliophthora thermophila* and *Fusarium oxysporum.*

Commercially available cellulases include Celluzyme^{®}, Carezyme^{®}, and Carezyme^{®} Premium, Celluclean^{®} and Whitezyme^{®} (Novozymes A/S), Revitalenz^{®} series of enzymes (Du Pont), and Biotouch^{®} series of enzymes (AB Enzymes). Suitable commercially available cellulases include Carezyme^{®} Premium, Celluclean^{®} Classic. Suitable cellulases are described in WO07/144857 and WO10/056652.

**Lipase:** Suitable lipases include those of bacterial, fungal or synthetic origin, and variants thereof. Chemically modified or protein engineered mutants are also suitable. Examples of suitable lipases include lipases from *Humicola* (synonym *Thermomyces*)*,* e.g., from *H. lanuginosa* (*T. lanuginosus*).

The lipase may be a "first cycle lipase", e.g. such as those described in WO06/090335 and WO13/116261. In one aspect, the lipase is a first-wash lipase, preferably a variant of the wild-type lipase from Thermomyces lanuginosus comprising T231R and/or N233R mutations. Preferred lipases include those sold under the tradenames Lipex^{®}, Lipolex^{®} and Lipoclean^{®} by Novozymes, Bagsvaerd, Denmark.

Other suitable lipases include: Liprl 139, e.g. as described in WO2013/171241; and TfuLip2, e.g. as described in WO2011/084412 and WO2013/033318.

**Other enzymes:** Other suitable enzymes are bleaching enzymes, such as peroxidases/oxidases, which include those of plant, bacterial or fungal origin and variants thereof. Commercially available peroxidases include Guardzyme^{®} (Novozymes A/S). Other suitable enzymes include choline oxidases and perhydrolases such as those used in Gentle Power Bleach^{™}.

Other suitable enzymes include pectate lyases sold under the tradenames X-Pect^{®}, Pectaway^{®} (from Novozymes A/S, Bagsvaerd, Denmark) and PrimaGreen^{®} (DuPont) and mannanases sold under the tradenames Mannaway^{®} (Novozymes A/S, Bagsvaerd, Denmark), and Mannastar^{®} (Du Pont).

**Zeolite builder:** The composition may comprise zeolite builder. The composition may comprise from 0wt% to 5wt% zeolite builder, or 3wt% zeolite builder. The composition may even be substantially free of zeolite builder; substantially free means "no deliberately added". Typical zeolite builders include zeolite A, zeolite P and zeolite MAP.

**Phosphate builder:** The composition may comprise phosphate builder. The composition may comprise from 0wt% to 5wt% phosphate builder, or to 3wt%, phosphate builder. The composition may even be substantially free of phosphate builder; substantially free means "no deliberately added". A typical phosphate builder is sodium tri-polyphosphate.

**Carbonate salt:** The composition may comprise carbonate salt. The composition may comprise from 0wt% to 10wt% carbonate salt, or to 5wt% carbonate salt. The composition may even be substantially free of carbonate salt; substantially free means "no deliberately added". Suitable carbonate salts include sodium carbonate and sodium bicarbonate.

**Silicate salt:** The composition may comprise silicate salt. The composition may comprise from 0wt% to 10wt% silicate salt, or to 5wt% silicate salt. A preferred silicate salt is sodium silicate, especially preferred are sodium silicates having a Na₂O:SiO₂ ratio of from 1.0 to 2.8, preferably from 1.6 to 2.0.

**Sulphate salt:** A suitable sulphate salt is sodium sulphate.

**Brightener:** Suitable fluorescent brighteners include: di-styryl biphenyl compounds, e.g. Tinopal^{®} CBS-X, di-amino stilbene di-sulfonic acid compounds, e.g. Tinopal^{®} DMS pure Xtra and Blankophor^{®} HRH, and Pyrazoline compounds, e.g. Blankophor^{®} SN, and coumarin compounds, e.g. Tinopal^{®} SWN

Preferred brighteners are: sodium 2 (4-styryl-3-sulfophenyl)-2H-napthol[1,2-d]triazole, disodium 4,4'-bis{[(4-anilino-6-(N methyl-N-2 hydroxyethyl)amino 1 ,3,5- triazin-2-yl)];amino}stilbene-2-2' disulfonate, disodium 4,4'-bis{[(4-anilino-6-morpholino-1,3,5-triazin-2-yl)]amino} stilbene-2-2' disulfonate, and disodium 4,4'- bis(2-sulfostyryl)biphenyl. A suitable fluorescent brightener is C.I. Fluorescent Brightener 260, which may be used in its beta or alpha crystalline forms, or a mixture of these forms.

**Chelant:** The composition may also comprise a chelant selected from: diethylene triamine pentaacetate, diethylene triamine penta(methyl phosphonic acid), ethylene diamine-N'N'-disuccinic acid, ethylene diamine tetraacetate, ethylene diamine tetra(methylene phosphonic acid) and hydroxy ethane di(methylene phosphonic acid). A preferred chelant is ethylene diamine-N'N'-disuccinic acid (EDDS) and/or hydroxyethane diphosphonic acid (HEDP). The composition preferably comprises ethylene diamine-N'N'- disuccinic acid or salt thereof. Preferably the ethylene diamine-N'N'-disuccinic acid is in S,S enantiomeric form. Preferably the composition comprises 4,5-dihydroxy-m-benzenedisulfonic acid disodium salt. Preferred chelants may also function as calcium carbonate crystal growth inhibitors such as: 1-hydroxyethanediphosphonic acid (HEDP) and salt thereof; N,N-dicarboxymethyl-2-aminopentane-1,5-dioic acid and salt thereof; 2-phosphonobutane-1,2,4-tricarboxylic acid and salt thereof; and combination thereof.

**Hueing agent:** Suitable hueing agents include small molecule dyes, typically falling into the Colour Index (C.I.) classifications of Acid, Direct, Basic, Reactive (including hydrolysed forms thereof) or Solvent or Disperse dyes, for example classified as Blue, Violet, Red, Green or Black, and provide the desired shade either alone or in combination. Preferred such hueing agents include Acid Violet 50, Direct Violet 9, 66 and 99, Solvent Violet 13 and any combination thereof.

Many hueing agents are known and described in the art which may be suitable for the present invention, such as hueing agents described in WO2014/089386.

Suitable hueing agents include phthalocyanine and azo dye conjugates, such as described in WO2009/069077.

Suitable hueing agents may be alkoxylated. Such alkoxylated compounds may be produced by organic synthesis that may produce a mixture of molecules having different degrees of alkoxylation. Such mixtures may be used directly to provide the hueing agent, or may undergo a purification step to increase the proportion of the target molecule. Suitable hueing agents include alkoxylated bis-azo dyes, such as described in WO2012/054835, and/or alkoxylated thiophene azo dyes, such as described in WO2008/087497 and WO2012/166768.

The hueing agent may be incorporated into the detergent composition as part of a reaction mixture which is the result of the organic synthesis for a dye molecule, with optional purification step(s). Such reaction mixtures generally comprise the dye molecule itself and in addition may comprise un-reacted starting materials and/or by-products of the organic synthesis route. Suitable hueing agents can be incorporated into hueing dye particles, such as described in WO 2009/069077.

**Dye transfer inhibitors:** Suitable dye transfer inhibitors include polyamine N-oxide polymers, copolymers of N-vinylpyrrolidone and N-vinylimidazole, polyvinylpyrrolidone, polyvinyloxazolidone, polyvinylimidazole and mixtures thereof. Preferred are poly(vinyl pyrrolidone), poly(vinylpyridine betaine), poly(vinylpyridine N-oxide), poly(vinyl pyrrolidone-vinyl imidazole) and mixtures thereof. Suitable commercially available dye transfer inhibitors include PVP-K15 and K30 (Ashland), Sokalan^{®} HP165, HP50, HP53, HP59, HP56K, HP56, HP66 (BASF), Chromabond^{®} S-400, S403E and S-100 (Ashland).

**Perfume:** Suitable perfumes comprise perfume materials selected from the group: (a) perfume materials having a ClogP of less than 3.0 and a boiling point of less than 250°C (quadrant 1 perfume materials); (b) perfume materials having a ClogP of less than 3.0 and a boiling point of 250°C or greater (quadrant 2 perfume materials); (c) perfume materials having a ClogP of 3.0 or greater and a boiling point of less than 250°C (quadrant 3 perfume materials); (d) perfume materials having a ClogP of 3.0 or greater and a boiling point of 250°C or greater (quadrant 4 perfume materials); and (e) mixtures thereof.

It may be preferred for the perfume to be in the form of a perfume delivery technology. Such delivery technologies further stabilize and enhance the deposition and release of perfume materials from the laundered fabric. Such perfume delivery technologies can also be used to further increase the longevity of perfume release from the laundered fabric. Suitable perfume delivery technologies include: perfume microcapsules, pro-perfumes, polymer assisted deliveries, molecule assisted deliveries, fiber assisted deliveries, amine assisted deliveries, cyclodextrin, starch encapsulated accord, zeolite and other inorganic carriers, and any mixture thereof. A suitable perfume microcapsule is described in WO2009/101593.

**Silicone:** Suitable silicones include polydimethylsiloxane and amino-silicones. Suitable silicones are described in WO05075616.

**Process for making the solid composition:** Typically, the particles of the composition can be prepared by any suitable method. For example: spray-drying, agglomeration, extrusion and any combination thereof.

Typically, a suitable spray-drying process comprises the step of forming an aqueous slurry mixture, transferring it through at least one pump, preferably two pumps, to a pressure nozzle. Atomizing the aqueous slurry mixture into a spray-drying tower and drying the aqueous slurry mixture to form spray-dried particles. Preferably, the spray-drying tower is a counter-current spray-drying tower, although a co-current spray-drying tower may also be suitable.

Typically, the spray-dried powder is subjected to cooling, for example an air lift. Typically, the spray-drying powder is subjected to particle size classification, for example a sieve, to obtain the desired particle size distribution. Preferably, the spray-dried powder has a particle size distribution such that weight average particle size is in the range of from 300 micrometers to 500 micrometers, and less than 10wt% of the spray-dried particles have a particle size greater than 2360 micrometers.

It may be preferred to heat the aqueous slurry mixture to elevated temperatures prior to atomization into the spray-drying tower, such as described in WO2009/158162.

It may be preferred for anionic surfactant, such as linear alkyl benzene sulphonate, to be introduced into the spray-drying process after the step of forming the aqueous slurry mixture: for example, introducing an acid precursor to the aqueous slurry mixture after the pump, such as described in WO 09/158449.

It may be preferred for a gas, such as air, to be introduced into the spray-drying process after the step of forming the aqueous slurry, such as described in WO2013/181205.

It may be preferred for any inorganic ingredients, such as sodium sulphate and sodium carbonate, if present in the aqueous slurry mixture, to be micronized to a small particle size such as described in WO2012/134969.

Typically, a suitable agglomeration process comprises the step of contacting a detersive ingredient, such as a detersive surfactant, e.g. linear alkyl benzene sulphonate (LAS) and/or alkyl alkoxylated sulphate, with an inorganic material, such as sodium carbonate and/or silica, in a mixer. The agglomeration process may also be an in-situ neutralization agglomeration process wherein an acid precursor of a detersive surfactant, such as LAS, is contacted with an alkaline material, such as carbonate and/or sodium hydroxide, in a mixer, and wherein the acid precursor of a detersive surfactant is neutralized by the alkaline material to form a detersive surfactant during the agglomeration process.

Other suitable detergent ingredients that may be agglomerated include polymers, chelants, bleach activators, silicones and any combination thereof.

The agglomeration process may be a high, medium or low shear agglomeration process, wherein a high shear, medium shear or low shear mixer is used accordingly. The agglomeration process may be a multi-step agglomeration process wherein two or more mixers are used, such as a high shear mixer in combination with a medium or low shear mixer. The agglomeration process can be a continuous process or a batch process.

It may be preferred for the agglomerates to be subjected to a drying step, for example to a fluid bed drying step. It may also be preferred for the agglomerates to be subjected to a cooling step, for example a fluid bed cooling step.

Typically, the agglomerates are subjected to particle size classification, for example a fluid bed elutriation and/or a sieve, to obtain the desired particle size distribution. Preferably, the agglomerates have a particle size distribution such that weight average particle size is in the range of from 300 micrometers to 800 micrometers, and less than 10wt% of the agglomerates have a particle size less than 150 micrometers and less than 10wt% of the agglomerates have a particle size greater than 1200 micrometers.

It may be preferred for fines and over-sized agglomerates to be recycled back into the agglomeration process. Typically, over-sized particles are subjected to a size reduction step, such as grinding, and recycled back into an appropriate place in the agglomeration process, such as the mixer. Typically, fines are recycled back into an appropriate place in the agglomeration process, such as the mixer.

It may be preferred for ingredients such as polymer and/or non-ionic detersive surfactant and/or perfume to be sprayed onto base detergent particles, such as spray-dried base detergent particles and/or agglomerated base detergent particles. Typically, this spray-on step is carried out in a tumbling drum mixer.

**Method of laundering fabric:** The method of laundering fabric comprises the step of contacting the solid composition to water to form a wash liquor, and laundering fabric in said wash liquor. Typically, the wash liquor has a temperature of above 0°C to 90°C, or to 60°C, or to 40°C, or to 30°C, or to 20°C. The fabric may be contacted to the water prior to, or after, or simultaneous with, contacting the solid composition with water. Typically, the wash liquor is formed by contacting the laundry detergent to water in such an amount so that the concentration of laundry detergent composition in the wash liquor is from 0.2g/l to 20g/l, or from 0.5g/l to 10g/l, or to 5.0g/l. The method of laundering fabric can be carried out in a front-loading automatic washing machine, top loading automatic washing machines, including high efficiency automatic washing machines, or suitable hand-wash vessels._Typically, the wash liquor comprises 90 litres or less, or 60 litres or less, or 15 litres or less, or 10 litres or less of water. Typically, 200g or less, or 150g or less, or 100g or less, or 50g or less of laundry detergent composition is contacted to water to form the wash liquor.

**Process of making a solid detergent cleaning composition.** The process comprises the step of:
(a) providing a water-soluble inorganic salt;
(b) providing a fabric hueing dye agent;
(c) mixing the water-soluble inorganic salt and the fabric hueing dye agent to form a mixture;
(d) subjecting the mixture obtained in step (c) to roller compaction to form a roller compacted sheet;
(e) breaking the roller compacted sheet to form initial particles;
(f) subjecting the initial particles to a sieving and colleting step to obtain coloured fabric hueing dye agent particles; and
(g) contacting the coloured fabric hueing dye agent particles to detergent base particles to form the solid detergent cleaning composition.

**Step (a), providing a water-soluble inorganic salt.** Step (a) provides a water-soluble inorganic salt.

**Step (b), providing a fabric hueing dye agent.** Step (b) provides a fabric hueing dye agent.

**Step (c), forming a mixture.** Step (c) mixes the water-soluble inorganic salt and the fabric hueing dye agent to form a mixture. Typically, good mixing is required for the uniform distribution of the hueing dye agent into the inorganic salt, for example a Ribbon mixer or Nauto blender mixer are preferred.

**Step (d), forming a roller compacted sheet.** Step (d) subjects the mixture obtained in step (c) to roller compaction to form a roller compacted sheet. Typically, the mixture is passed through two counter rotating rolls, with the flow being induced by the friction acting at the surfaces of the rolls. Typically, the mixture is subjected to pressure in the narrow gap between the rolls, leading to the formation of a compaction in the form of a continuous strip. The roller compactor can be a Hosokawa Bepex roller compactor which is widely available and applied for manufacturing free flowing agglomerates. Typically, the operation of the roller compactor will involve defining the correct centrelines for roller speed, roller gap, hydraulic pressure and recycles streams to achieve the desired sheet quality. Typically, a high hydraulic pressure is required to achieve the optimal particle envelope density.

Preferably, during step (d), the mixture obtained in step (c) is subjected to a pressure of at least 1.8 × 10⁷ Pa, or even at least 1.9 × 10⁷ Pa , Preferably,the mixture obtained in step (c) is subjected to a pressure of from 1.8 × 10⁷ Pa to 2.2×10⁷ Pa, or from 1.85×10⁷ Pa to 2.1×10⁷ Pa, or even from 1.9 × 10⁷ Pa to 2.0×10⁷ Pa.

**Step (e), forming initial particles.** Step (e) breaks the roller compacted sheet to form initial particles. Typically, the roller compacted sheet is passed through a milling operation, typically involving a grinder containing cutters and a mesh of desired size inside, as the roller compacted sheet is forced through the cutters and out of the mesh, it's size is reduced as it forms initial particles

**Step (f), obtaining coloured fabric hueing dye agent particles.** Step (f) subjects the initial particles to a sieving and colleting step to obtain coloured fabric hueing dye agent particles. Recycles stream at this stage typically involves the overs being recycled to the grinder and the fines being recycled back to the roller compactor.

**Step (g)**, **forming the solid detergent cleaning composition.** Step (g) contacts the coloured fabric hueing dye agent particles to detergent base particles to form the solid detergent cleaning composition.

**Domestic method of treating a textile.** The domestic method of treating a textile comprises the steps of:
(i) treating a textile with an aqueous solution of 0.5 to 20 g/l of the solid detergent cleaning composition to form a treated textile; and
(ii) optionally, rinsing and drying the treated textile.

**Use of reducing the bleeding of the fabric hueing dye agent.** The present invention provides the use of coloured fabric hueing dye agent particles in a solid laundry detergent to reduce bleeding of the fabric hueing dye agent,
wherein the coloured fabric hueing dye agent particles comprise:
(a) from 6.0wt% to 10wt% by weight thereof of the fabric hueing dye agent; and
(b) a water-soluble inorganic salt,
wherein the coloured fabric hueing dye agent particles have an envelope density of at least 1.9 g/cm3 as measured by Geopyc method.

**Method of measuring envelope density Geopyc method.** The envelope density is measured by the Geopyc method. By Envelope density it is typically meant the ratio of the mass of a particle to the envelope volume of the particle, where envelope volume includes that of its pores and small cavities, hence it is the sum of the volumes of the solid in each piece and the voids within each piece, that is, within close-fitting imaginary envelopes completely surrounding each piece.

The Geopyc Pycnometer is widely used for the envelope density measurement, utilizing a solid dispersion material (rigid spheres with high degree of flowability) that envelops a representative sample but does not penetrate into particle pore spaces.

Method for measuring the envelope density is as follows, the manual of the specific equipment is to be followed, as an example:
Measure and record the sample weight with four figure balance. Dismount the piston and chamber from the Geopyc by screwing each item counterclockwise off the mountings; within a dust hood fill 10cm3 of Dryflo into the test chamber. Slowly lower the piston into the chamber to ensure Dryflo is not lost. Run a blank with Dryflo only for the blank run using 3 cycles, conversion factor 0.5153 cm3/mm (for a 25.4mm chamber diameter) and consolidation force of 51N. Load the sample, mixing the sample with DryFlo well and repeat the run. Note the resulting average of the 3 cycles and standard deviation.

### Embodiments of the present invention

1. A composition comprising a plurality of coloured fabric hueing dye agent particles, wherein the coloured fabric hueing dye agent particles comprise:
   (a) from 6.0wt% to 10wt% by weight thereof of the fabric hueing dye agent; and
   (b) a water-soluble inorganic salt,
   wherein the coloured fabric hueing dye agent particles have an envelope density of at least 1.9
   g/cm3 as measured by Geopyc method.
2. A composition according to embodiment 1, wherein the water-soluble inorganic salt is sodium carbonate.
3. A composition according to any preceding embodiment, wherein the fabric hueing dye agent comprises a hueing dye having the structure: 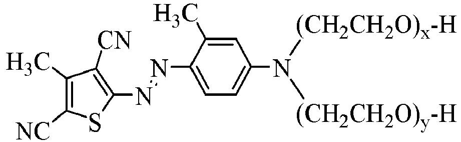 wherein the index values x and y are independently selected from 1 to 10,
4. A process for making a composition according to any preceding embodiment, wherein the process comprising the step of:
   (a) providing a water-soluble inorganic salt;
   (b) providing a fabric hueing dye agent;
   (c) mixing the water-soluble inorganic salt and the fabric hueing dye agent to form a mixture;
   (d) subjecting the mixture obtained in step (c) to roller compaction to form a roller compacted sheet;
   (e) breaking the roller compacted sheet to form initial particles; and
   (f) subjecting the initial particles to a sieving and colleting step to obtain coloured fabric hueing dye agent particles.
5. A process according to embodiment 4, wherein during the roller compaction step (d), mixture obtained in step (c) is subjected to a pressure of at least 1.9 × 10⁷ Pa.
6. A solid detergent cleaning composition comprising coloured fabric hueing dye agent particles and at least one laundry care ingredient, wherein the coloured fabric hueing dye agent particles comprise:
   (a) from 6.0wt% to 10wt% by weight thereof of the fabric hueing dye agent; and
   (b) a water-soluble inorganic salt,
   wherein the coloured fabric hueing dye agent particles have an envelope density of at least 1.9 g/cm3 as measured by Geopyc method.
7. A composition according to embodiment 6, wherein the water-soluble inorganic salt is sodium carbonate.
8. A composition according to any preceding embodiment, wherein the fabric hueing dye agent comprises a hueing dye having the structure: 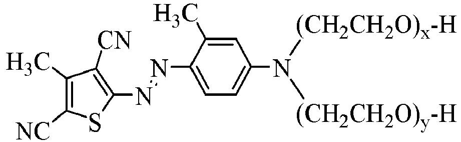 wherein the index values x and y are independently selected from 1 to 10,
9. A composition according to any preceding embodiment, wherein the composition is a laundry detergent composition.
10. A composition according to any preceding embodiment, wherein the composition is in powder form.
11. A composition according to any of embodiments 6 to 10, wherein the composition is in the form of a single-compartment pouch, a multi-compartment pouch, a sheet, a pastille or bead, a fibrous article, a tablet, a bar, flake, or any mixture thereof.
12. A composition according to any of embodiments 6 to 11, wherein the composition comprises from 10wt% to 50wt% surfactant.
13. A composition according to any of embodiments 6 to 12, wherein the composition comprises a detergent ingredient selected from one or more of: enzymes, bleach agents, anti-redeposition agents, neutralizers, optical brighteners, foam inhibitors, chelators, bittering agents, dye transfer inhibitors, soil release agents, water softeners, electrolytes, pH regulators, anti-greying agents, anti-crease components, colorants, scents, processing aids, and any mixture thereof.
14. A process for making a composition according to any of embodiments 6 to 13, wherein the process comprising the step of:
   (a) providing a water-soluble inorganic salt;
   (b) providing a fabric hueing dye agent;
   (c) mixing the water-soluble inorganic salt and the fabric hueing dye agent to form a mixture;
   (d) subjecting the mixture obtained in step (c) to roller compaction to form a roller compacted sheet;
   (e) breaking the roller compacted sheet to form initial particles;
   (f) subjecting the initial particles to a sieving and colleting step to obtain coloured fabric hueing dye agent particles; and
   (g) contacting the coloured fabric hueing dye agent particles to detergent base particles to form the solid detergent cleaning composition.
15. A process according to embodiment 14, wherein during the roller compaction step (d), mixture obtained in step (c) is subjected to a pressure of at least 1.8 ×10⁷ Pa.
16. A domestic method of treating a textile, wherein the method comprising the steps of:
   (i) treating a textile with an aqueous solution of 0.5 to 20 g/l of the composition according to any of embodiments 1 to 8 to form a treated textile; and
   (ii) optionally, rinsing and drying the treated textile.
17. Use of a solid laundry detergent comprising coloured fabric hueing dye agent particles to reduce bleeding of the fabric hueing dye agent,
   wherein the coloured fabric hueing dye agent particles comprise:
   (a) from 6.0wt% to 10wt% by weight thereof of the fabric hueing dye agent; and
   (b) a water-soluble inorganic salt,
   wherein the coloured fabric hueing dye agent particles have an envelope density of at least 1.9 g/cm3 as measured by Geopyc method.
18. Use of a solid laundry detergent comprising coloured fabric hueing dye agent particles in a domestic method of treating a textile according to embodiment 11, to reduce fabric staining during the method of treating the textile,
   wherein the coloured fabric hueing dye agent particles comprise:
   (a) from 6.0wt% to 10wt% by weight thereof of the fabric hueing dye agent; and
   (b) a water-soluble inorganic salt,
   wherein the coloured fabric hueing dye agent particles have an envelope density of at least 1.9 g/cm3 as measured by Geopyc method.

### EXAMPLES

### Bleeding test in 45% humidity chamber at 40C:

Particles 1 and 2 contain a coloured fabric hueing dye agent e.g., a polymeric colorant eg Liquitint V200 from Milliken and a sodium carbonate carrier. They are made by roller compaction process as described, and the colouring agent added is measured by mass %. Particle 1 has higher colouring agent load and also higher envelope density as a result of exposure to higher pressure during the compaction step.

| | Envelope density, g/cm3 | Coloring agent, mass % |
|---|---|---|
| Invention - Particle 1 | 1.9892 | 8 |
| Particle 2 | 1.8005 | 3.8 |

### Particle size distribution comparison:

| | Particle 1 | | Particle 2 | |
|---|---|---|---|---|
| | % mass | | % mass | |
| Microns | AVG | STD | AVG | STD |
| **1400** | 0.03 | 0.03 | 0.01 | 0.01 |
| **1180** | 0.53 | 0.30 | 0.00 | 0.00 |
| **1000** | 19.33 | 5.11 | | |
| **850** | 22.00 | 4.44 | 34.96 | 3.45 |
| **600** | 33.59 | 3.01 | 47.56 | 8.62 |
| **425** | 22.36 | 9.55 | 23.58 | 4.60 |
| **300** | 0.72 | 0.31 | 2.85 | 0.57 |
| **250** | 0.07 | 0.14 | 0.81 | 0.00 |
| **0** | 0.13 | 0.09 | 2.03 | 0.57 |

The particle size distribution is measured by a Rotap sieving method where 100g of sample is shaken at amplitude 0.6 for 5 min in the sieve stack and the mass retained in each sieve is measured.

The envelope density is measured as previously described.
1. Particle 1 and 2 added to 1kg of pre-made white detergent powder at equivalent coloring agent per centage level, there is 2.5g of Particle 1 and 7g of Particle 2.
2. Mixed for 2 minutes in Kenwood food mixer.
3. Product added to large petri dishes (~20g per petri dish)
4. Open petri dishes placed onto a tray and added into humidity chamber set to 40C/45% RH
5. Petri dishes left open for 24 hours to condition to 45%.
6. Petri dishes sealed and left in the oven for 13 days. 1 sample per leg removed every 2-3 days (dependent on the weekend) with equilibrium relative humidity (or water activity) measured and visual bleeding inspection completed.
7. Outcome: The invention particle does not bleed significantly in the duration of the test whilst the Particle 2 has swollen and changed the colour of the white powder.

| | Invention | Particle 2 |
|---|---|---|
| Numbers of day to failure/bleeding | Does not significantly bleed up to 13 days | Bleeding is evident after 7 days |

The bleeding was paneled by a group of 10 people according to the scale:

| Bleeding Level | Points |
|---|---|
| Not bled | 0 |
| Bled a little | 1 |
| Bled a lot | 2 |

They were shown digital images and asked to give a score for each. These scores were then totaled to give overall bleeding score.

| **Person** | **Particle 1** | | | **Particle 2** | | |
|---|---|---|---|---|---|---|
| | **Day 1** | **Day 7** | **Day 13** | **Day 1** | **Day 7** | **Day 13** |
| a | 0 | 0 | 0 | 2 | 2 | 2 |
| b | 0 | 0 | 0 | 1 | 1 | 2 |
| c | 0 | 0 | 0 | 1 | 1 | 2 |
| d | 0 | 1 | 1 | 2 | 2 | 2 |
| e | 1 | 0 | 1 | 1 | 1 | 2 |
| f | 0 | 0 | 0 | 1 | 1 | 1 |
| g | 0 | 0 | 1 | 1 | 1 | 2 |
| h | 0 | 0 | 0 | 1 | 1 | 2 |
| i | 0 | 1 | 1 | 1 | 1 | 2 |
| j | 0 | 0 | 0 | 1 | 1 | 2 |
| **Total Score** | **1** | **2** | **4** | **12** | **12** | **19** |

## Claims

1. A composition comprising a plurality of coloured fabric hueing dye agent particles, wherein the coloured fabric hueing dye agent particles comprise:
(a) from 6.0wt% to 10wt% by weight thereof of the fabric hueing dye agent; and
(b) a water-soluble inorganic salt,
wherein the coloured fabric hueing dye agent particles have an envelope density of at least 1.9 g/cm3 as measured by Geopyc method.

2. A composition according to claim 1, wherein the water-soluble inorganic salt is sodium carbonate.

3. A composition according to any preceding claim, wherein the fabric hueing dye agent comprises a hueing dye having the structure: 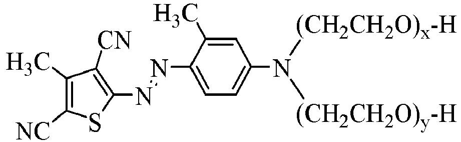 wherein the index values x and y are independently selected from 1 to 10.

4. A process for making a composition according to any preceding claim, wherein the process comprising the step of:
(a) providing a water-soluble inorganic salt;
(b) providing a fabric hueing dye agent;
(c) mixing the water-soluble inorganic salt and the fabric hueing dye agent to form a mixture;
(d) subjecting the mixture obtained in step (c) to roller compaction to form a roller compacted sheet;
(e) breaking the roller compacted sheet to form initial particles; and
(f) subjecting the initial particles to a sieving and colleting step to obtain coloured fabric hueing dye agent particles.

5. A process according to claim 4, wherein during the roller compaction step (d), mixture obtained in step (c) is subjected to a pressure of at least 1.9 × 10⁷ Pa.
